# EUROPEAN PATENT SPECIFICATION

(11) **EP 1 699 664 B1**
(45) Date of publication and mention of the grant of the patent: **02.04.2008**
(21) Application number: 04820559.5
(22) Date of filing: 16.12.2004
(51) Int. Cl.: B60Q 1/38, B60Q 1/40

(54) **MEANS OF AUTOMATIC INDICATION OF THE CHANGE OF THE DRIVING DIRECTION BEFORE THE TAKE OFF RUN OF A MOTOR VEHICLE**
MITTEL ZUR AUTOMATISCHEN FAHRTRICHTUNGSÄNDERUNGSANZEIGE VOR INBETRIEBNAHME EINES KRAFTFAHRZEUGS
SYSTEME D'INDICATION AUTOMATIQUE DE CHANGEMENT DE DIRECTION DE CONDUITE AVANT LE FONCTIONNEMENT DE DEPART D'UN VEHICULE A MOTEUR

(30) Priority: 18.12.2003 SK 15622003
(43) Date of publication of application: 13.09.2006
(73) Proprietor: Szitas, Anton, 851 01 Bratislava (SK); Kus, Lubomir, 900 29 Nova Dedinka (SK)
(72) Inventor: Szitas, Anton, 851 01 Bratislava (SK); Kus, Lubomir, 900 29 Nova Dedinka (SK)
(74) Representative: Kajabova, Monika
(86) International application number: PCT/SK2004/000017
(87) International publication number: WO 2005/058641

(56) References cited:
- US-A- 5 673 019
- US-A- 5 712 618
- US-A1- 2003 004 643

## Description

### Technical field

Patent is related to automation of some functions of the indication of the change of the driving direction before the take off run of a motor vehicle.

### Background Art

Now days motor vehicles are fitted with indicators of the change of the driving direction, controlled manually according to the opinion and requirement of the driver accordingly to the rules of the road traffic.

The use of indicators of the change of the driving direction is also reserved to the will and opinion of the driver. As every driver has different habits and style of signalisation, sometimes occurs situations that the driver uses the indicator improperly or not at all.

The most complicated situation occurs before taking run of a motor vehicle standing by the road along or across it. In such a case, before the entry of the vehicle into the traffic is the use of the indication of the change of the driving direction very necessary, especially because the vehicle will be included in the travelling traffic. The attention of other drivers should be drawn by the indication of this vehicle. Moreover before including his vehicle into the traffic, the driver is occupied by observing the movement of other vehicles on the road, of vehicles standing around, eventually of walkers and very often forgets to signalise the change of the driving direction.

The indication of the change of the driving direction and the regulation of it is solved by several patents, e.g. US Patent 4,684,918 named "Equipment signalizing the change of direction". The solution included in this submitted patent is however concerns mainly the interconnection of direction indicators and their controls, while the control of indication is manual.

US Patent 5,673,019 named "Automatic system for direction indicators and safeguard equipment" solves rather the problem of a safe interconnection of the direction indicator and its controller.

UK Patent Application No. 2 361 192 A named "Indicator of controlling the branching-off for vehicles" solves the problem of switching-off the direction indicators by branching to the opposite direction as is that switched, or by over ranging the time limit of direction indication.

Another of the documents dealing with issue of indication of the change of the driving direction of a motor vehicle is the US Patent Application No. 5 712 618 named "Method and Apparatus for an Automatic Signaling Device". The technical problem being solved in the patent is the use of deactivation of the indicators of the change of driving direction. Solving of the given problem contains, according to the independent claim 1, different requirements, which must be met prior to deactivation of the indicator signalling.

The method and apparatus according to the named US Patent has general change of the vehicle velocity among the requirements of activation, e. c. they are meant for use during the drive of the vehicle, not on the take off run of the vehicle after parking. The apparatus according to named US Patent solves, among others, the issue trough the moment of side distance D of the vehicle, in the patent application there is no need to evaluate the side distance before the take off run of the vehicle, only the turning of wheels, e. c. of the steering wheel of the vehicle. The apparatus for determining the turning of the steering wheel - β angle is positioned in named US Patent on the steering wheel, in the patent application there is not defined, in the independent claim 1, the way of scanning the steering wheel turning, e. c. wheel turning.
None of these solutions concerns vehicles in accelerating period and the indication of the change of the driving direction during it.

### Disclosure of Invention

Above listed disadvantages are eliminated by the solution according to this patent, where the art of automatic indication of the change of the driving direction before the start of the vehicle consists in that, that the direction indicator is switched on automatically by a software unit when the motor is turned on, it is geared up a speed enabling to start moving the vehicle and the driving wheel turned in a dedicated angle, at least 10°, preferably 15° from the straight direction of the axis of the vehicle.

The direction indicator is automatically switched off by the software unit when the velocity of the vehicle exceeds 30 km/h and/or the speed enabling to start moving the vehicle is geared off and/or the brake pedal is actuated and/or the clutch pedal is actuated and/or the hand brake is activated. This prevents unintended function of the automatic indication e.g. during queuing in the crossroad, by so called playing with the driving wheel and alike.

The indication of the change of the driving direction will be done by minimum three flashes of the indicator, also in the case that any of the conditions for its being shut off has been met.

Moreover the merit of the patent consists in, that the inserted speed is scanned by the sensor of the position of the gear change lever and/or gear mechanism and/or electronic control unit for sensing of speed used, as well as in that the turning off the driving wheel is sensed by a sensor of the position of the steering axle and/or the position of wheels and/or the position of driving wheel shaft and/or the position of steering.

Merit of the invention consists also in, that the indication of the change of the driving direction is also done by additional indicators of the change of the driving direction situated on the front and/or rear posts of the motor vehicle.

During the ride the automatic indication of the change of the driving direction will be neutralized by the software unit and also if the driver will use the indication mechanically.

### Best Mode of Carrying out the Invention

The following example of realisation is demonstrative only and does not exhaust other possible applications.

The way of the automatic indication of the change of the driving direction before the take off run of a motor vehicle, if the driver does not use the indication mechanically, when the left indicator is by the software unit automatically switched on when the motor is set on, there is geared the speed No. 1 and the driving wheel has been turned by 20° to the left from the direct axis of the vehicle.

The left indicator will be automatically switched off when the velocity will reach 30 km/h. Geared speed is sensed by the sensor of the position of the gear change lever, and the turning off the driving wheel is sensed by a sensor of the position of the driving wheel shaft. Moreover the vehicle is fitted with matching direction indicators located in the middle of the front posts what facilitates a better visibility of the direction indication e.g. by adverse weather.

### Industrial Applicability

Patent is utilisable in any class of motor vehicles to improve the safety of road traffic. Patent may be applied in fully automated vehicles as well.

## Claims

1. Method for automatically indicating the change of the driving direction before the take off run of a motor vehicle **characterized by that,** that the indicator of the change of the driving direction is by a software unit automatically switched on by motor started up, by a speed enabling to start moving the vehicle is geared on and the driving wheel turned in a dedicated angle, at least 10°, preferably 15° from the straight direction of the vehicle axis and then the indicator of the change of the driving direction is switched off by the software unit as the velocity of the vehicle exceeds 30 km/h and/or the brake pedal is actuated and/or the clutch pedal is actuated and/or the hand brake is actuated, while the indication of the change of the driving direction will be done by minimum three flashes of the indicator.

2. Method for automatically indicating the change of the driving direction before the take off run of a motor vehicle according to claim 1 **characterized by that,** that the geared speed is sensed by the sensor of the position of the gear change lever and/or gear mechanism and/or electronic control unit for sensing the used speed.

3. Method for automatically indicating the change of the driving direction before the take off run of a motor vehicle according to claim 1 **characterized by** t hat, that the turning off the driving wheel is sensed by a sensor of the position of the steering axle and/or the position of wheels and/or the position of driving wheel shaft and/or the position of steering.

4. Method automatically indicating the change of the driving direction before the take off run of a motor vehicle according to claim 1 **characterized by that,** that the indication of the change of the driving direction is done by additional indicators of the change of the driving direction situated on the front and/or rear posts of the motor vehicle.

## Patentansprüche

1. Verfahren zur automatischen Fahrtrichtungsänderungsanzeige vor Inbetriebnahme eines Kraftfahrzeugs, **gekennzeichnet durch**, dass die Fahrtrichtungänderungsanzeige ist durch den Softwaregerät eingeschaltet bei eingelassenen Fahrmotor, eingeschalteten Gang der die in Bewegungssetzung des Fahrzeuges ermöglicht, und, am mindestens um 10°, vorteilhaft um 15° aus der geraden Richtung der Fahrzeugachse ausgedrehten Lenkrad, dann die Fahrtrichtungänderungsanzeige wird **durch** das Softwaregerät automatisch ausgeschaltet nach der Überschreitung der Geschwindigkeit von 30 km/h und/oder wird der Gang der die in Bewegungssetzung des Fahrzeuges ermöglicht ausgeschaltet, und/oder wird der Bremspedal getreten, und/oder wird der Kupplungspedal getreten, und/oder die Handbremse aktiviert wobei die Fahrtrichtungänderungsanzeige mit mindestens drei Blinken des Fahrtrichtungänderungsanzeige durchgeführt wird.

2. Verfahren zur automatischen Fahrtrichtungsänderungsanzeige vor Inbetriebnahme eines Kraftfahrzeugs nach Anspruch 1, **dadurch gekennzeichnet, dass** der eingeschaltete Gang mit dem Lagefühler des Schalthebels und/oder mit dem elektronischen Kontrollgerät des Getriebes zur Abtastung des eingeschalteten Ganges abgetastet ist.

3. Verfahren zur automatischen Fahrtrichtungsänderungsanzeige vor Inbetriebnahme eines Kraftfahrzeugs nach Anspruch 1, **dadurch gekennzeichnet, dass** die Ausdrehung des Lenkrades mit dem Fühler der Lage der Steuerachse, und/oder den Räder und/oder der Lenkradestange und/oder das Steuern abgetastet ist.

4. Verfahren zur automatischen Fahrtrichtungsänderungsanzeige vor Inbetriebnahme eines Kraftfahrzeugs nach Anspruch 1, **dadurch gekennzeichnet, dass** die Fahrtrichtungänderungsanzeige ist auch mit zusätzlichen Fahrtrichtungsanzeiger die an den Vorder- und/oder Hecksäulen des Kraftfahrzeugs angebracht sind.

## Revendications

1. Méthode d'indication automatique de changement de direction de conduite avant le fonctionnement de depart d'un véhicule a moteur **caractérisée en ce que** l'indicateur de changement de direction de roulement est enclenché automatiquement par une unité logicielle quand le moteur est démarré, une vitesse permettant le démarrage du roulement du véhicule est passée et le volant est tourné à l'angle indiqué au minimum 10° , préférablement 15°, par rapport au sens direct de l'axe du véhicule, ensuite l'indicateur de changement de direction est désactivé automatiquement par l'unité logicielle lorsque le véhicule dépasse la vitesse 30 km/h et/ou on passe au point mort permettant le démarrage du véhicule et/ou la pédale de freinage est appuyée et/ou la pédale d'embrayage est appuyée et/ou le frein à main est activé, et l'indication de changement de direction de roulement se réalisera au minimum avec trois clignotements de l'indicateur de changement de direction de roulement.

2. Méthode d'indication automatique de changement de direction de conduite avant le fonctionnement de depart d'un véhicule a moteur selon la revendication 1 **caractérisée en ce que** la vitesse passée est détectée par le détecteur de la position du levier de vitesses et/ou la boîte de vitesses e/ou l'unité électronique de contrôle de la boîte de vitesses pour la détection de la vitesse passée.

3. Méthode d'indication automatique de changement de direction de conduite avant le fonctionnement de depart d'un véhicule a moteur selon la revendication 1 **caractérisée en ce que** le braquage du volant est détecté par le détecteur de la position de l'essieu de commande et/ou des roues et/ou de la tige du volant et/ou la direction.

4. Méthode d'indication automatique de changement de direction de conduite avant le fonctionnement de depart d'un véhicule a moteur selon la revendication 1 **caractérisée en ce que** l'indication du changement de direction de roulement est réalisée également par les indicateurs de changement de direction de roulement supplémentaires situés sur les supports avant et/ou arrière du véhicule à moteur.
